(19) Europäisches Patentamt
European Patent Office
Office européen des brevets

(11) Publication number: 0 144 770
B1

(12) EUROPEAN PATENT SPECIFICATION

(45) Date of publication of patent specification: 02.08.89

(51) Int. Cl.$^4$: H 04 N 7/08, H 04 N 7/10, H 04 N 5/44, H 04 H 1/04

(21) Application number: 84113367.1

(22) Date of filing: 06.11.84

(54) CATV Signal Transmitting System and Related Receiving System.

(30) Priority: 07.11.83 JP 208741/83
08.11.83 JP 209488/83

(43) Date of publication of application:
19.06.85 Bulletin 85/25

(45) Publication of the grant of the patent:
02.08.89 Bulletin 89/31

(84) Designated Contracting States:
DE FR GB NL

(56) References cited:
DE-A-3 223 408

NACHRICHTENTECHNISCHE ZEITSCHRIFT, ntz, vol. 36, no. 6, 1983, Berlin. PETER H GRAF et al.: "Digitale Tonübertragung über Satelliten", pages 364-370
FUNKSCHAU 1974, no. 18, München. ANTON KÖHLER: "Satelliten-Fernsehemfang in Gemeinschaftsantennen - Anlagen", pages 689-692

(73) Proprietor: SONY CORPORATION
7-35 Kitashinagawa 6-Chome Shinagawa-ku
Tokyo 141 (JP)

(72) Inventor: Sahara, Hiroshi c/o Sony Corporation
7-35 Kitashinagawa 6-chome Shinagawa-ku
Tokyo (JP)
Inventor: Watanabe, Yoshimi c/o Sony Corporation
7-35 Kitashinagawa 6-chome Shinagawa-ku
Tokyo (JP)

(74) Representative: Patentanwälte TER MEER - MÜLLER - STEINMEISTER
Mauerkircherstrasse 45
D-8000 München 80 (DE)

EP 0 144 770 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of the invention

This invention relates to a CATV (cable Television) signal transmission system, i.e., a system arranged between an antenna and a cable. This invention also relates to a CATV signal receiving system, i.e. a system to be connected to a cable to receive signals from that cable.

Description of the prior art

When a broadcast satellite system and a prior art CATV system, including an antenna, a transmitting system, a cable, and a receiving system are combined with each other, the combination becomes as shown in Figure 1, corresponding to the disclosure of DE—A1—32 23 408.

In this case, in the broadest satellite, the audio signals $S_1$ to $S_4$ modulated in the form of PCM (pulse code modulated) digital signals and PSK-modulated on an audio sub-carrier of 5.727272 MHz and then respectively transmitted from the broadcast satellite 1. And in the indoor units 231 to 234, the PCM signals are respectively decoded to the audio signals $S_1$ to $S_4$. In other words, up to the indoor units 231 to 234, each of the audio signals $S_1$ to $S_4$ is in extremely superior quality with a band width of 20 kHz and a wide dynamic range.

However, at the stage when the audio signals $S_1$ to $S_4$ are delivered to the coaxial cable 6, the audio signals $S_1$ to $S_4$ are respectively modulated to the same FM signals as those used in the ordinary television broadcasting. Also, as shown in Figure 2, the audio signals $S_1$ to $S_4$ are multiplexed with the video signals $V_1$ to $V_4$ in frequency-divided manner so that the tone quality presented by the PCM digital signal is deteriorated.

Objects and summary of the invention

It is an object of this invention to provide a CATV signal transmitting system which allows to transmit signals that provide for audio signals of a high quality.

It is another object of this invention to provide a CATV signal receiving system for receiving video signals and audio signals providing for a high tone quality reproduction.

According to one aspect of this invention, there is provided a CATV signal transmitting system according to Claim 1 and according to a further aspect of this invention, there is provided a CATV signal receiving system according to Claim 7.

In the transmitting system according to this invention, the demodulating means provides digitally coded audio signals which are treated by an interface and a second modulating means in such a manner that the audio signals may be mixed with the television signals. This means that one additional television channel is provided for transmitting only the high quality audio signals The receiving system separates the audio signals of this additional channel from the video signals of the other channels.

In a preferred embodiment, the demodulating means provides not only for the digitally coded audio signals but also for FM-audio signals similar as per se known from the prior art demodulating means. The FM-audio signals related to a channel are combined with the video signals related to a channel to form a telvision signal of one channel. This makes it possible to receive the transmitting system signal also with a conventional receiving system.

The other objects, features and advantages of the present invention will become apparent from the following description taken in conjunction with the accompanying drawings through which the like references designate the same elements and parts.

Brief description of the drawings

Figure 1 is a circuit block diagram showing a currently proposed system in which video and audio signals transmitted from a broadcast satellite station are respective demodulated and then transmitted through a CATV transmission line;

Figure 2 is a waveform diagram showing a signal system which is used in the system shown in Figure 1;

Figures 3A to 3C are respectively signal format diagrams of digital signals used in a CATV system according to this invention;

Figure 4 is a circuit block diagram showing an embodiment of the CATV system according to this invention;

Figure 5 is a diagram showing a transmission channel used in the CATV system of the invention shown in Figure 4;

Figure 6 is a circuit block diagram showing another embodiment of the CATV system according to this invention; and

Figure 7 is a diagram showing a transmission channel used in the CATV system of the invention shown in Figure 6.

Description of the preferred embodiments

Now, the present invention will hereinafter be described with reference to the drawings.

In this invention, the video signals are transmitted as explained in connection with Figure 1, while the audio signals are converted to PCM signals having signal formats as shown in Figures 3A to 3C and then transmitted to a different channel.

As shown in Figure 3A, this PCM signal is a binary signal having a large number of frames and one frame thereof is formed of 256 words, W1 to W256. One word thereof is formed of 168 bits and the cycle or period thereof is 1/44.1 kHz (22.7 μsec) as shown in Figure 3B. In each word, a word synchronizing code SYNC of 8-bit, a service bit SB of 4-bit, data bits CHA to CHD of 32 bits×4 and an error correction bit of 7 bits×4 are multiplexed with one another in time-division manner.

In this case, as shown in Figure 3A, the word synchronizing code SYNC is made as a frame synchronizing codes FS in the first word W1 of the frame and is coded as a word synchronizing code WS in other 255 words W2 to W256. The bit pattern of the word synchronizing code WS is different from that of the frame synchronizing code FS.

The service bit SB is a signal which takes bits of one frame, namely, 4×256=1024 bits as one unit and indicates an address signal for each terminal 3 and the content of service (permission for listening to pay channel audio broadcasting) for the terminal 3. Also, the service bit code SB can be used as a mode switching signal which indicates the kind of a digital signal to be transmitted. As a result, on the basis of such mode switching signal, in case of particular pattern, the PCM signal broadcast from the broadcast satellite is transmitted to the CATV transmission line and the particular pattern is identified on the receiving side, whereby the television receiver is switched into an operative mode.

Further, the data bits CHA to CHD are each formed of 32 bits and construct four independent channels CHA to CHD. Each of the channels CHA to CHD can adopt any one of modes A to D which are shown in Figure 3C.

In the mode A, left and right channel stereo audio signals L and R are sampled by a sampling frequency of 44.1 kHz and encoded to PCM signals of 16 bits each. The signal format of these PCM signals is the same signal format of DAD (digital audio disc) in a so-called CD (compact disc) system. Accordingly, the mode A provides for a stereo audio signal of extremely high quality.

In the mode B, two pairs of stereo signals $L_1$, $R_1$ and $L_2$, $R_2$ are respectively sampled by the frequency of 44.1 kHz and then encoded to PCM signals of 8 bits, respectively. In the mode B, the noise reduction is carried out by signal-expanding and signal-compressing the audio signals $L_1$ to $R_2$, too. Consequently, in accordance with the mode B, it is possible to provide a stereo broadcasting of high quality in two different channels.

In the mode C, monaural signals $M_1$ to $M_8$ channels are sampled by a frequency of 22.05 kHz and then respectively encoded to PCM signals of 8 bits. In this case, in accordance with the use, some of the monaural signals $M_1$ to $M_8$ are used for facsimile and the like. Thus, in this mode C, it is possible to realize services such as news, weather forecast, emergency broadcasting, facsimile and so on.

Further, in the mode D, the mode B and the mode C are combined to each other so as to realize one channel so that this mode D can cope with more elaborate service.

The modes A to D and the channels CHA to CHD can freely be combined with one another.

7 bits each of the error correction code ECC are used to carry out the error correction of the channels CHA to CHD and a BCH code, by way of example, can be used as the code ECC.

The PCM signal Sp with the signal format as described above has the transmission bit rate as given by

$$168 \text{ bits} \times 44.1 \text{ kHz} \cong 7.4 \text{ Mb/s}$$

Thus, the PCM signal Sp can be transmitted by using the frequency band of 6 MHz which is the frequency band of one channel in the television broadcasting.

Figure 4 schematically illustratess an embodiment of the CATV system according to the present invention, in which a radio wave of four channels from the broadcast satellite 1 is received and then transmitted to each terminal 3. In Figure 4, like parts corresponding to those in Figure 1 are marked with the same references and will not be described in detail.

As shown in Figure 4, in the CATV center 2, the video signals $V_1$ to $V_4$ and the audio signals $S_1$ to $S_4$ derived from the indoor units 231 to 234 are respectively supplied to modulators 261 to 264, in which they are modulated to the television signals $T_1$ to $T_4$, each of which has a different channel as, for example, shown in Figure 5. These television signals $T_1$ to $T_4$ are fed to the mixing circuit 25.

From the indoor units 231 to 234, derived are PCM audio signals, namely, audio signals, $P_1$ to $P_4$ which were subjected to error correction processing but not to D/A (digital-to-analog)-conversion. These signals $P_1$ to $P_4$ are respectively supplied to an interface circuit 27 and then converted to the PCM signals Sp which was described in connection with Figure 3. In this case, the signals $P_1$ to $P_4$ are respectively assigned to the channels CHA to CHD and every channel is set in the mode A.

Then, this PCM signal Sp is supplied to a VSB (vestigial side band) modulator 265 thereby modulated to a VSB signal $T_5$ having an occupied-frequency band of 6 MHz, namely, signal $T_5$ of the same system as that of the modulated signal when the video carrier wave is modulated by the video signal in the current television broadcasting. This signal $T_5$ is supplied to the mixing circuit 25. From the mixing circuit 25, a signal which results from mixing the signals $T_1$ to $T_5$ is sent to the coaxial cable 6.

While, in a terminal 30, the signal from the cable 6 is supplied to a tuner 31, in which a television signal Ti (i is an integer of any one of 1 to 4) of a desired channel is frequency-converted to a video intermediate frequency signal. This video intermediate frequency signal Ti is supplied through a video intermediate frequency amplifier 32 to a video detector 33, in which the video intermediate frequency signal is demodulated to a video signal. This video signal is supplied to a color demodulator 34 thereby demodulated to three primary color signals, R, G and B. These three primary color signals R, G and B are respectively supplied to a color cathode ray tube 35 in which a color signal is reproduced.

Further, the signal from the coaxial cable 6 is supplied to a front end (tuner circuit) 41, in which the signal $T_5$ is frequency-converted to an intermediate frequency signal. This signal is supplied through an intermediate frequency amplifier 42 to a demodulator 43, in which it is demodulated to the PCM signal Sp. This PCM signal Sp is supplied to a channel selector 44 from which the digital data of the channel CHi corresponding to the channel (signal Ti) which was selected from the channels CHA to CHD in the tuner 31 is derived. This digital data is supplied to a decoder 45, in which it is subjected to error correction.

Thereafter, this digital data is supplied to D/A converters 46L and 46R from which the original audio signals L and R are derived. These audio signals L and R are supplied through amplifiers 47L and 47R to speakers 48L and 48R thereby played back in stereo mode.

While, at the general terminal 3, the image and sound are reproduced from the signals $T_1$ to $T_4$.

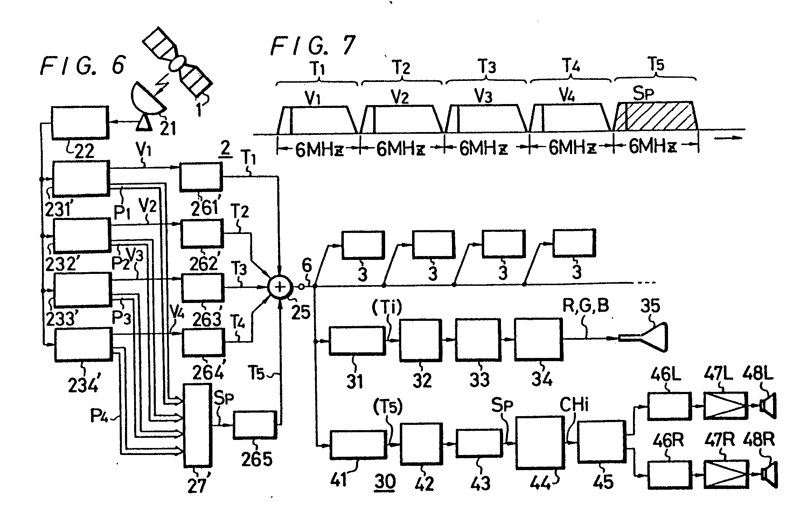

Another embodiment of the CATV system according to this invention will be described with reference to Figure 6. In the embodiment shown in Figure 6, like circuit elements corresponding to those in Figure 4 are marked with the same references and will not be described in detail. In this embodiment, the radio wave of 4 channels is received from the broadcast satellite 1 and the video signal and the audio signal are respectively transmitted through independent channels to each terminal 3.

In Figure 6, in the CATV center 2, the video signals $V_1$ to $V_4$ from indoor units 231′ to 234′ are respectively supplied to VSB modulators 261′ to 264′, in which they are modulated to the television signals $T_1$ to $T_4$ of wide frequency band, each having a different channel as, for example, shown in Figure 7. However, these television signals $T_1$ to $T_4$ have no audio signals $S_1$ to $S_4$ shown in Figure 5. These television signals $T_1$ to $T_4$ are respectively, supplied to the mixing circuit 25.

Further, derived from the indoor units 231′ to 234′ are the PCM audio signals, namely, digital audio signals $P_1$ to $P_4$ which are not yet subjected to D/A-conversion. These digital audio signals $P_1$ to $P_4$ are respectively supplied to an interface circuit 27′ thereby converted to the PCM signal Sp which was explained in connection with Figure 3. In this case, the signals $P_1$ to $P_4$ are respectively assigned to the channels CHA to CHD and any one of the channels CHA to CHD is set in the mode A of 16 bits with the sampling frequency of 44.1 kHz.

This PCM signal Sp is supplied to the VSB modulator 265 thereby modulated to the VSB signal $T_5$ having the occupied-frequency band of 6 MHz, namely, the signal $T_5$ of the same band width as that of the modulated signal when the video carrier wave is modulated by the video signal in the current television broadcast. This signal $T_5$ is also supplied to the mixing circuit 25 so that the mixed signal of the signals $T_1$ to $t_5$ is delivered from the mixing circuit 25 to the coaxial cable 6.

Further, in the terminal 3, the signal from the coaxial cable 6 is supplied to the tuner 31, in which the television signal Ti (i is the integer of any one of 1 to 4) of the desired channel is frequency-converted to the video intermediate frequency signal. This signal is supplied through the video intermediate frequency amplifier 32 to the video detector 33 in which it is demodulated to the video signal. This video signal is supplied to the color demodulator 34 thereby demodulated to the three primary color signals R, G and B. These three primary color signals R, G and B are fed to the color cathode ray tube 35 on which then a color picture image is reproduced.

The signal from the coaxial cable 6 is supplied to the front end (tuner circuit) 41, in which the signal $T_5$ is frequency-converted to the intermediate frequency signal. This signal is supplied through the intermediate frequency amplifier 42 to the demodulator 43 thereby demodulated to the PCM signal Sp. This PCM signal Sp is supplied to the channel selector 44 which produces the digital audio signal of the channel CHi corresponding to the channel (signal Ti) selected from the channels CHA to CHD in the tuner 31. This digital audio signal is supplied to the decoder 45 and subjected to error correction. Thereafter, this digital audio signal is supplied to the D/A converters 46L and 46R which then derives the original audio signals L and R. These audio signals L and R are respectively supplied through amplifiers 47L and 47R to the speakers 48L and 48R so as to carry out the playback in stereo mode.

As described above, according to this invention, the television broadcast sent through the broadcast satellite 1 can be viewed by the CATV system. In this case, particularly in accordance with this invention, since the audio signal which is transmitted from the satellite broadcast 1 in the form of the PCM signal is converted in signal format and then transmitted in the form of the PCM signal to each terminal 3, the tone quality thereof is never deteriorated and it is possible to reproduce sound of remarkably high quality.

In the CATV system shown in Figure 1, when the television signals are assigned to the successive channels as shown in Figure 2, the occupied-frequency bands of the audio signals $S_1$ to $S_4$ must be narrowed in order to alleviate the interference between the adjacent channels in the terminal 3, thus the stereo broadcasting being made impossible. Therefore, in practice, the television signals $T_1$ to $T_4$ are assigned to every other channel so that on the whole, the wide frequency band must be provided. However, according to this invention, since the audio signals $S_1$ to $S_4$ are not contained in the television signals $T_1$ to $T_4$, the television signals $T_1$ to $T_5$ can be assigned to the consecutive channels as shown in Figure 7 so that in spite of the television signals $T_5$, it is possible to narrow the necessary frequency band to, for example, 30 MHz on the whole.

If it is permitted to assign the television signals $T_1$ to $T_5$ to every other channel, the video signals $V_1$ to $V_4$ can occupy all the frequency bands of 6 MHz in each channel so that it is possible to transmit signals of higher quality as the video signals $V_1$ to $V_4$.

As is clear from the description as mentioned above, according to this invention, the television broadcast transmitted through the broadcast satellite 1 can be viewed amd heared by the CATV system. Particularly in accordance with this inenention, since the audio signal sent from the broadcast satellite 1 in the form of PCM signal is converted in signal format and then transmitted to the terminal 30 in the form of PCM signal, it is possible to prevent the tone quality thereof from being deteriorated and hence sound of extremely high quality can be played back.

Further, since the television signals $T_1$ to $T_4$ have the ordinary format of the video and audio signals, it is possible to enjoy at the general terminal 3 the broadcast satellite television program in which the audio signal is not the PCM signal.

Furthermore, without modifying the existing CATV system particularly, it is possible to supply to each terminal 3 the picture image and sound of high quality by the broadcast satellite.

Since the signal format as shown in Figure 3 is used to send other audio signal than that used in the broadcast satellite and information signal such as facsimile simultaneously, it is possible to provide a wide variety of services more elaborately.

Further, since the CATV system of the invention is compatible with the prior art CATV system, even the user at the general terminal 3 can enjoy the television program of the broadcast satellite similarly. Since the user at the terminal 30 receives the audio signal which is transmitted with the tone quality of the PCM signal, the user can enjoy a so-called Hi-Fi sound of extremely high quality. Further, the CATV system of this invention can cope with a case in which the sound of the broadcast satellite is made high in quality and is made suitable for the multichannel so that the CATV system of this invention can cope with the future development.

Furthermore, in the embodiment shown in Figure 6, the audio signal is transmitted through the different channel from that of the video signal and the audio frequency band within the television channel in the prior art can be assigned to the frequency band of the video signal so that the frequency band of the video signal can be made wider by that much, thus the picture image of high quality being transmitted. In addition, the CATV system of this invention can cope with the multichannel audio system of the broadcast satellite and so, this CATV system becomes the system which can cope with the future development.

**Claims**

1. A CATV signal transmitting system comprising

a) a plurality of demodulating means (231—234, 231'—234'), each being related to one of a plurality of channels, for deriving a plurality of base band video signals (V1—V4) and for deriving audio signals,

b) a plurality of first modulating means (261—264, 261'—264'), each one receiving the base band video signals (V1—V4, respectively) of the related demodulating means, for modulating the received base band video signals (V1—V4, respectively) to provide television signals (T1—T4, respectively), and

c) means (25) for mixing said television signals and for transmitting the mixed signals to a CATV transmission line (6), characterized in that

d) each of said demodulating means (231—234, 231'—234') provides digitally coded audio signals (P1—P4, respectively),

e) an interface circuit (27, 27') is provided for converting the digitally coded audio signals (P1—P4) to PCM signal (Sp) assigned to different channels,

f) a second modulating means (265) is provided for modulating the PCM signals as received from the interface circuit, to provide a television audio signal (T5) being modulated with the same channel frequency band as the television signals (T1—T4), and in that

g) said television signal mixing means (25) (T1—T4) additionally mixes said television audio signal (T5).

2. A system according to Claim 1, wherein each of said demodulating means provides FM-audio signals (S1—S4) in addition to said digitally coded audio signals (P1—P4), which audio signals are modulated together with said video signals (V1—V4) by said first modulating means (261—264, 261'—264') to provide said television signals (T1—T4).

3. A system according to one of Claims 1 or 2, wherein said digitally coded audio signals are time-division multiplexed.

4. A system according to Claim 3, wherein said time-division multiplexed output digitally coded signals are arranged in the following order:

a) a word synchronizing signal (WS);

b) a service bit signal (SB);

c) a plurality of channels of digitally coded audio signals (CHA—CHD); and

d) an error check code signal (EEC).

5. A system according to Claim 4, wherein each of said plurality of channels of digitally coded audio signals is coded in a 16 bit format and sampled by a sampling frequency of 44.1 kHz.

6. A system according to Claim 4, wherein said service bit signal (SB) is indicative of the transmitting mode of different kinds of digital signals at least including said digitally coded audio signals.

7. A CATV signal receiving system comprising:

a) a first tuning stage (31) to be connected to a CATV transmission line for tuning one channel of a plurality of CATV channels, the main carrier of which is modulated by a base-band video signal; and

b) video detecting means (33) connected to said first tuning stage for producing the video signal to be supplied to a display device; characterized by

c) a second tuning stage (41) to be connected to said CATV transmission line for tuning another channel of the plurality of CATV channels, the main carrier of which is modulated by a digitally coded audio signal; and

d) demodulating means (43) connected to said second tuning stage for converting the digitally coded audio signal into an analog audio signal.

**Patentansprüche**

1. CATV-Signal-Übertragungssystem mit:

a) mehreren Demodulatoren (231—234, 231'—234') die jeweils einem von mehreren Kanälen zugeordnet sind, zur Gewinnung mehrerer Grundband-Videosignale (V1—V4) und mehrerer Tonsignale,

b) mehreren ersten Modulatoren (261—264, 261'—264'), die jeweils ein entsprechendes Grundband-Videosignal (V1—V4) der zugeordneten Demodulatoren übernehmen, zum Modulieren der jeweils empfangenen Grundband-Videosignale (V1—V4), um Fernsehsignale (T1—T4) zu bilden, und mit

c) einer Einrichtung (25) zum Mischen der Fernsehsignale und zur Aufschaltung der gemischten Signale auf eine CATV-Übertragungsleitung (6), dadurch gekennzeichnet, daß

d) jeder Demodulator (231—234, 231'—234') jeweils digital modierte Tonsignale (P1—P4) abgibt,

e) eine Anpassungsschaltung (27, 27'), die kodierte Tonsignale (P1—P4) in den verschiedenen Kanälen zugeteilte PCM-Signalen (Sp) umsetzt,

f) ein zweiter Modulator (265) die von der Anpassungsschaltung erhaltenen PCM-Signale moduliert, um ein Fernsehtonsignal (T5) zu erzeugen, das mit dem gleichen Kanalfrequenzband wie die Fernsehsignale (T1—T4) moduliert ist, und daß

g) der Fernsehsignalmischer (25) zusätzlich auch das Fernsehtonsignal (T5) mischt.

2. CATV-Signal-Übertragungssystem nach Anspruch 1, bei dem jeder der Demodulatoren FM-Tonsignale (S1—S4) zusätzlich zu den digital kodierten Tonsignalen (P1—P4) abgibt und diese Tonsignale zusammen mit den Videosignalen (V1—V4) von den ersten Modulatoren (261—264, 261'—264') moduliert sind, um die Fernsehsignale (T1—T4) zu bilden.

3. CATV-Signal-Übertragungssystem nach Anspruch 1 oder 2, bei dem die digital kodierten Tonsignale in Zeitmultiplex verschachtelt sind.

4. CATV-Signal-Übertragungssystem nach Anspruch 3, bei dem die ausgegebenen zeitmultiplexierten, digital kodierten Signale in folgender Reihenfolge auftreten:

a) ein Synchronisiersignal (WS);

b) ein Servicebitsignal (SB);

c) mehrere Kanäle mit digital kodierten Tonsignalen (CHA-CHD); und

d) ein Fehlerprüfkodesignal (EEC).

5. CATV-Signal-Übertragungssystem nach Anspruch 4, bei dem jeder der mehreren Kanäle mit digital kodierten Tonsignalen in einem 16 Bit-Format kodiert ist und mit einer Abtastfrequenz von 44.1 Hz getastet wird.

6. CATV-Signal-Übertragungssystem nach Anspruch 4, bei dem das Service-bitsignal (SB) den Übertragungsmodus verschiedener Arten von Digitalsignale anzeigt, die mindestens die digital kodierten Tonsignale enthalten.

7. CATV-Signal-Empfangssystem mit:

a) einer ersten Abstimmstufe (31), die an der CATV-Übertragungsleitung angeschlossen ist, zum Abstimmen eines der mehreren CATV-Kanäle, dessen Hauptträgerfrequenz mit dem Grundband-Videosignal moduliert ist; und

b) einem Video-Gleichrichter (33), der mit der ersten Abstimmstufe verbunden ist, zur Erzeugung eines einem Bildschirm zuführbaren Videosignals; gekennzeichnet durch

c) eine zweite Abstimmstufe (41), die an der CATV-Übertragungsleitung angeschlossen ist, zum Abstimen eines weiteren Kanals der mehreren CATV-Kanäle, dessen Hauptträgerfrequenz mit einem digital kodierten Tonsignal moduliert ist; und durch

d) einen Demodulator (43), der mit der zweiten Abstimmstufe verbunden ist, zum Umwandeln des digital kodierten Tonsignals in ein analoges Tonsignal.

**Revendications**

1. Système de transmission d'un signal de télévision par câble, comprenant:

a) plusieurs dispositifs de démodulation (231—234, 231'—234'), associés chacun à l'un de plusieurs canaux de manière qu'ils dérivent plusieurs signaux vidéo de bande de base (V1—V4) et qu'ils dérivent des signaux d'audiofréquences,

b) plusieurs premiers dispositifs de modulation (261—264, 261'—264'), recevant chacun des signaux vidéo de bande de base (V1—V4 respectivement) du dispositif associé de démodulation, afin que les signaux vidéo de bande de base V1—V4 respectivement) reçus soient modulés pour former des signaux télévision (T1—T4 respectivement), et

c) un dispositif (25) de mélange des signaux de télévision et de transmission des signaux mélangés à une ligne (6) de transmission de télévision par câble, caractérisé en ce que:

d) chaque dispositif de démodulation (231—234, 231'—234') forme des signaux d'audiofréquences codés numériquement (P1—P4 respectivement),

e) un circuit d'interface (27, 27') est destiné à transformer les signaux d'audiofréquences codés numériquement (P1—P4) en signaux MIC (Sp) affectés aux différents canaux,

f) un second dispositif de modulation (265) est destiné à moduler les signaux MIC tels qu'ils sont reçus à partir du circuit d'interface, afin qu'ils forment un signal d'audiofréquences de télévision (T5) modulé dans la bande des fréquences du même canal que les signaux de télévision (T1—T4), et en ce que

g) le dispositif de mélange (25) de signaux de télévision (T1—T4) mélange en outre le signal d'audiofréquences de télévision (T5).

2. Système selon la revendication 1, dans lequel chacun des dispositifs de démodulation transmet des signaux d'audiofréquences modulés en fréquences (S1—S4) en plus des signaux d'audiofréquences codés numériquement (P1—P4), les signaux d'audiofréquences étant modulés avec les signaux vidéo (V1—V4) par le premier dispositif de modulation (261—264, 261'—264') afin qu'ils forment les signaux de télévision (T1—T4).

3. Système selon l'une des revendications 1 et 2, dans lequel les signaux d'audiofréquences codés numériquement sont multiplexés temporellement.

4. Système selon la revendication 3, dans lequel les signaux codés numériquement et multiplexés temporellement sont disposés dans l'ordre suivant:

a) un signal (WS) de synchronisation de mot,

b) un signal (SB) de multiplet de service,

c) plusieurs canaux de signal d'audiofréquences codés numériquement (CHA-CHD), et

d) un signal de code de vérification d'erreur (ECC).

5. Système selon la revendication 4, dans lequel chacun des canaux des signaux d'audiofréquences codés numériquement est codé en format à 16 bits et est échantillonné à une fréquence d'échantillonnage de 44,1 kHz.

6. Système selon la revendication 4, dans lequel le signal (SB) de multiplet de service est représentatif du mode de transmission des différents types de signaux numériques comprenant au moins les signaux d'audiofréquences codés numériquement.

7. Système récepteur de signaux de télévision par câble, comprenant:

a) un premier étage d'accord (31) destiné à être connecté à une ligne de transmission de télévision par câble afin qu'un canal soit accordé parmi plusieurs canaux de télévision par câble, la porteuse principale du canal étant modulée par un signal vidéo de bande de base, et

b) un dispositif (33) de détection vidéo, connecté au premier étage d'accord et destiné à créer le signal vidéo qui doit être transmis à un dispositif d'affichage, caractérisé par:

c) un second étage d'accord (41) destiné à être connecté à la ligne de transmission de télévision par câble afin qu'il assure l'accord d'un autre canal parmi les canaux de télévision par câble, la porteuse principale de ce canal étant modulée par un signal d'audiofréquences codé numériquement, et

d) un dispositif de démodulation (43) connecté au second étage d'accord et destiné à transformer le signal d'audiofréquences codé numériquement en un signal analogique d'audiofréquences.

FIG. 1

FIG. 2

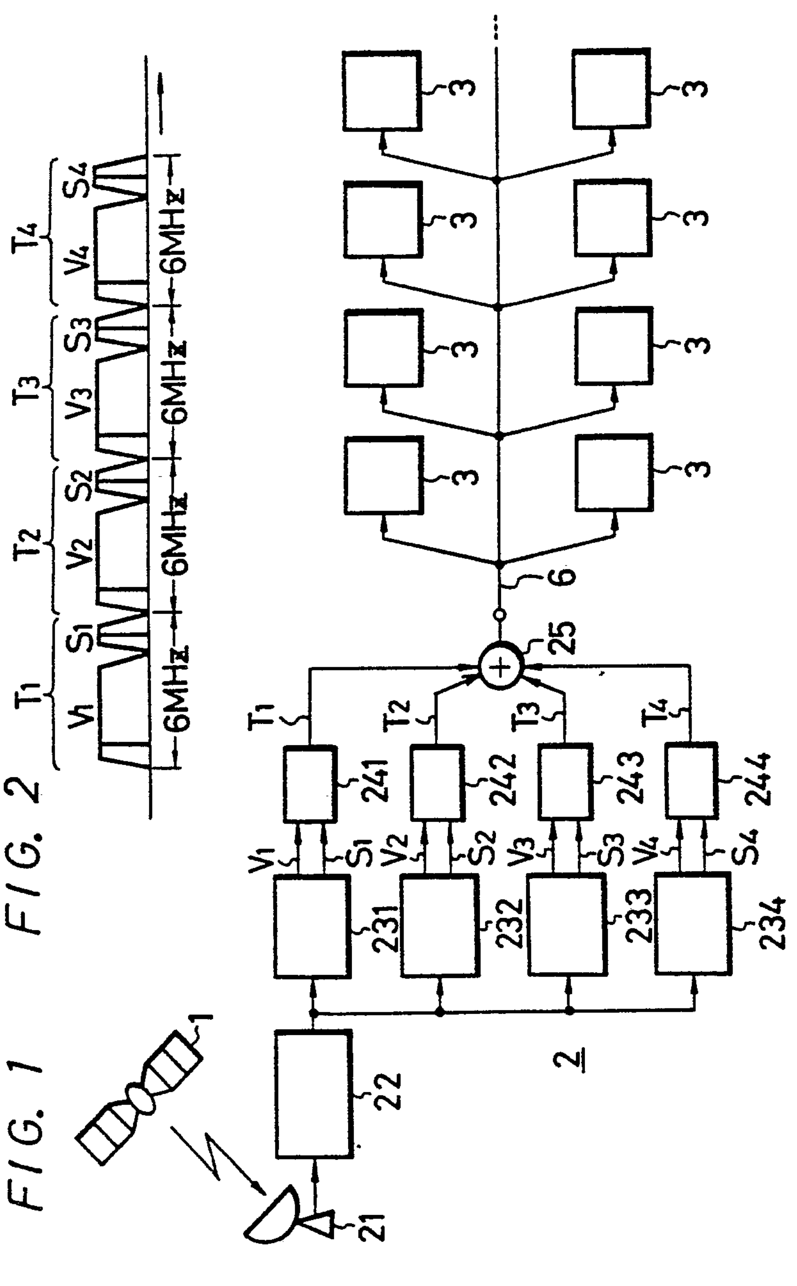
T1
T2
T3
T4
V1
S1
V2
S2
V3
S3
V4
S4
6MHz
6MHz
6MHz
6MHz
1
2
21
22
231
232
233
234
241
242
243
244
25
6
3

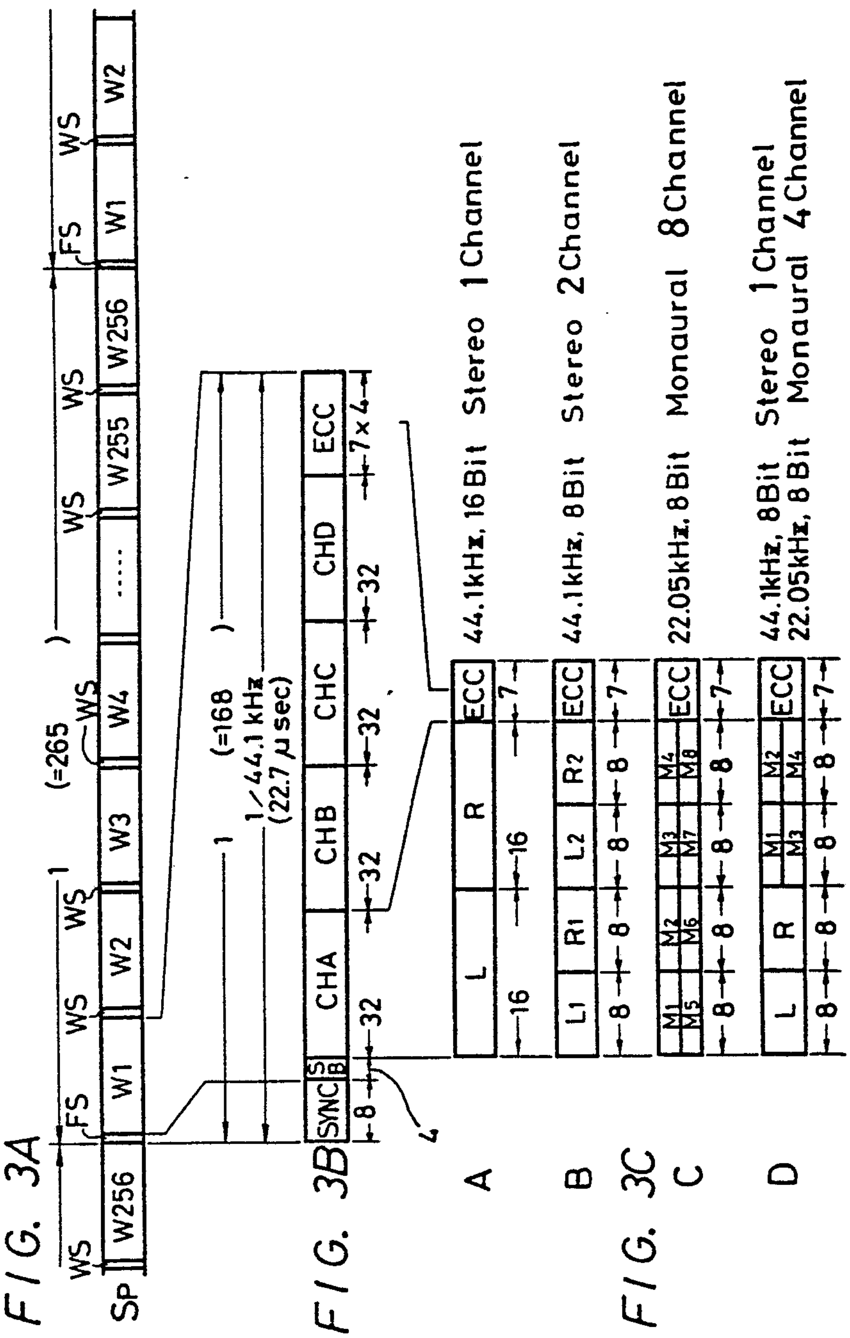


FIG. 3A

FIG. 3B

FIG. 3C

FIG. 4

FIG. 5

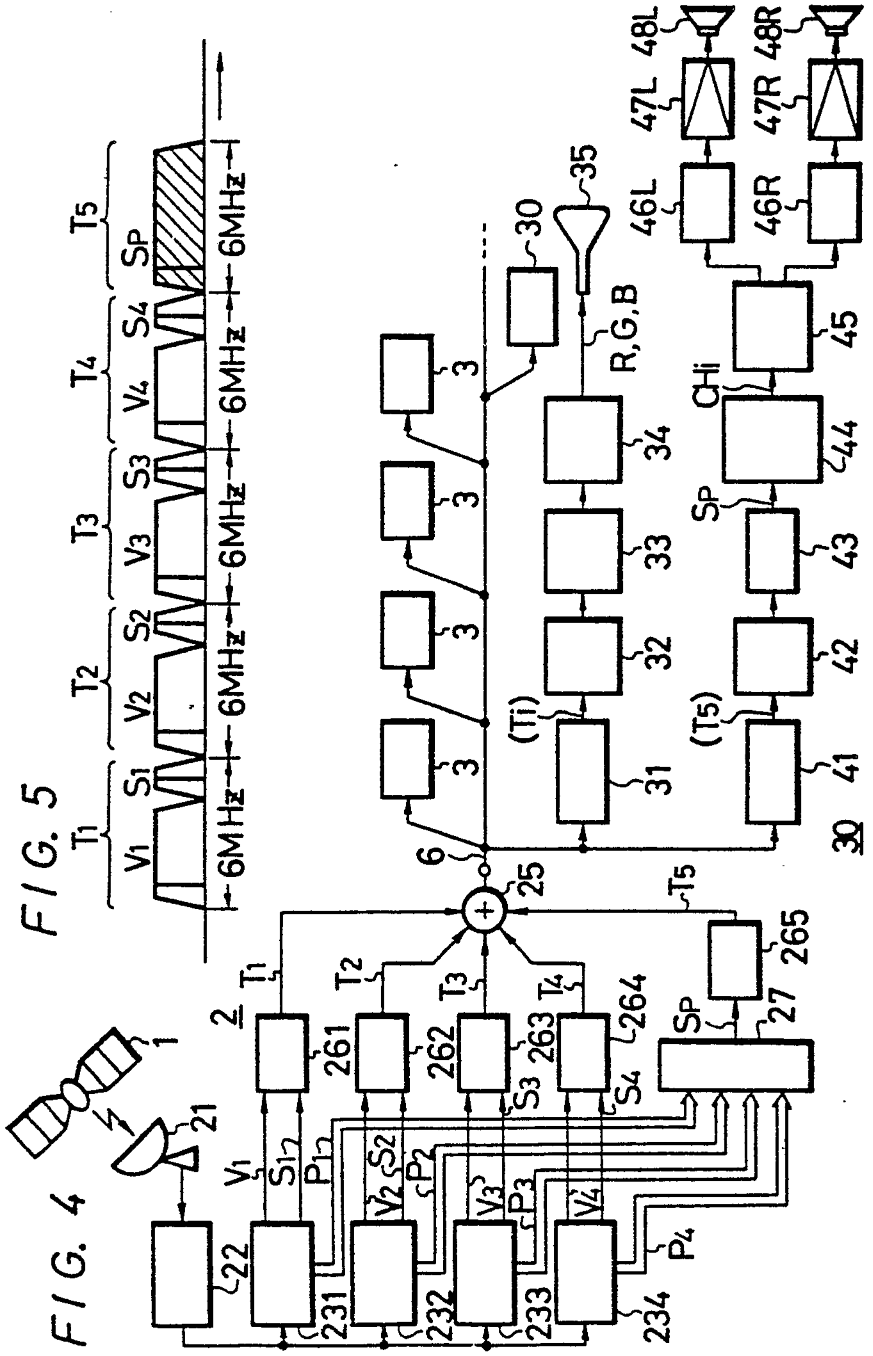

FIG. 6

FIG. 7